# EUROPÄISCHE PATENTSCHRIFT

(11) **EP 3 152 076 B1**
(45) Veröffentlichungstag und Bekanntmachung des Hinweises auf die Patenterteilung: **25.09.2019**
(21) Anmeldenummer: 15707276.0
(22) Anmeldetag: 21.02.2015
(51) Int. Cl.: B60J 7/057

(54) **VERFAHREN ZUM STEUERN EINES ELEKTRISCH VERSTELLBAREN SCHIEBEDACHS EINES KRAFTFAHRZEUGS**
METHOD TO CONTROL A VEHICLE ELECTRIC SUNROOF
MÉTHODE POUR CONTRÔLER UN TOIT OUVRANT ÉLECTRIQUE D'UNE VOITURE

(30) Priorität: 06.06.2014 DE 102014008432
(43) Veröffentlichungstag der Anmeldung: 12.04.2017
(73) Patentinhaber: Daimler AG, 70327 Stuttgart (DE)
(72) Erfinder: ENTENMANN, Volker, 71563 Affalterbach (DE); FRITZ, Oliver, 73760 Ostfildern (DE); SCHILD, Susanne, 71116 Gärtringen (DE); ZHANG-XU, Tingting, 71069 Sindelfingen (DE)
(74) Vertreter: JENSEN & SON
(86) Internationale Anmeldenummer: PCT/EP2015/000397
(87) Internationale Veröffentlichungsnummer: WO 2015/185170

(56) Entgegenhaltungen:
- EP-A1- 1 424 237
- EP-A2- 1 477 351
- DE-A1-102011 089 419
- US-A- 6 157 372

## Beschreibung

Die Erfindung betrifft ein Verfahren zum Steuern eines elektrisch verstellbaren Schiebedachs eines Kraftfahrzeugs gemäß dem Oberbegriff des Patentanspruch 1. Des Weiteren betrifft die Erfindung eine Schiebedacheinrichtung und ein Kraftfahrzeug zum Implementieren solch eines Verfahrens.

Es ist bekannt, berührungssensitive Tastfelder, sogenannte Touchpads, als Bedienelemente in Fahrzeugen einzusetzen. Solche berührungssensitiven Tastfelder weisen eine zweidimensionale Sensorstruktur auf und erfassen die Berührung eines oder mehrerer Finger beispielsweise basierend auf dem Konzept der "mutual capacitance", der gegenseitigen Kapazität.

"Mutual capacitance" ist die kapazitive Kopplung zwischen Objekten beziehungsweise die Kapazität, die zwischen zwei Ladungsträgern oder Leitern auftritt, wobei Strom, der den einen Ladungsträger oder Leiter durchfließt, in den anderen übergeht. In einem kapazitiven Touchsensor tritt die gegenseitige kapazitive Kopplung zwischen einer X- und einer Y-Achselelektrode auf. Die Messung nach der "mutual capacitance" wird mit den Elektroden einer Sensorschicht die als Empfänger dient, und den Elektroden einer gegenüberliegenden Sensorschicht, die als Sensor dienen, implementiert. Die Kreuzungen jeder x-Achselelektrode der einen Sensorschicht mit den Y-Achselelektroden der anderen Sensorschicht werden als Knoten definiert. Ein Multi-Touch-System basiert auf den Messungen der gegenseitigen Kapazität an jedem Knoten des Sensors, so dass die Positionen mehrerer gleichzeitiger Berührungen auf dem Touchsensor verfolgt werden können.

Bei der Verwendung von Touchpads als Bedienelemente im Fahrzeug, beispielsweise als Bedienelement für ein elektrisch verstellbares Schiebedach, sind ferner Sicherheitsanforderungen zu erfüllen, um versehentliches Betätigen zu vermeiden. Außerdem muss die Bedieneinheit mit dem berührungssensitiven Tastfeld insbesondere auch jeweilige Anforderung von Zulassungsvorschriften erfüllen. Je sensitiver der Sensor des berührungssensitiven Tastfelds ist, desto robuster funktioniert das Verfahren zum Steuern eines elektrisch verstellbaren Schiebedachs eines Kraftfahrzeugs mit solch einer Bedieneinheit.

Um Sensordaten der zweidimensionalen Sensorstruktur weiterzuverarbeiten, werden die Sensordaten interpoliert. Die Interpolation der Sensordaten führt lediglich zu einem guten Ergebnis, wenn die Sensordaten vollständig sind, das heißt wenn die Sensordaten für die gesamte orthogonale Matrix erzielt worden sind.

Aus der EP 1 477 351 A2 ist ein Fahrzeugdach mit einer Bedieneinrichtung umfassend eine Sensorflächenanordnung zur Erfassung einer Bewegung einer Hand bekannt.

Aus der DE 10 2011 089 419 A1 ist weiter eine Bedienvorrichtung für ein Schiebedach eines Fahrzeuges mit einem berührungsempfindlichen Bildschirm bekannt. Abhängig von einer Trajektorie eines erfassten Berührungsvorganges auf dem Bildschirm wird ein Stellantrieb zum Einstellen des Öffnungsgrades des Schiebedaches angesteuert. Weiterhin ist beschrieben, den Öffnungswinkel durch Tippvorgänge auf dem Bildschirm zu beeinflussen.

Aufgabe der vorliegenden Erfindung ist es, ein Verfahren zum Steuern eines elektrisch verstellbaren Schiebedachs eines Kraftfahrzeugs, mittels eines berührungssensitiven Tastfelds als Bedieneinheit, sowie eine Schiebedacheinrichtung für ein Kraftfahrzeug, und ein Kraftfahrzeug mit einer Schiebedacheinrichtung zu schaffen, mittels welchen das Schiebedach besonders einfach zu bedienen ist.

Diese Aufgabe wird erfindungsgemäß durch ein Verfahren mit den Merkmalen des Patentanspruchs 1 gelöst. Des Weiteren wird diese Aufgabe durch eine Schiebedacheinrichtung mit den Merkmalen des Patentanspruchs 6 sowie durch ein Kraftfahrzeug mit den Merkmalen des Patentanspruchs 8 gelöst. Vorteilhafte Ausgestaltungen mit zweckmäßigen Weiterbildungen der Erfindung sind in den übrigen Patentansprüchen angegeben.

Um ein Verfahren zum Steuern eines elektrisch verstellbaren Schiebedachs eines Kraftfahrzeugs, mittels eines berührungssensitiven Tastfelds als Bedieneinheit, zu schaffen, mittels welcher das Schiebedach besonders einfach zu bedienen ist, sind die im Folgenden beschriebenen Verfahrensschritte vorgesehen.

Ein Verstellen des Schiebedachs in eine Schließstellung wird durch eine erste Wischbewegung über das Tastfeld bewirkt. Die Bewegung des Schiebdachs bei einem Verstellen kann dabei beispielsweise mit einem elektrischen Motor, welcher von der Bedieneinheit angesteuert wird, verursacht werden. Die Schließstellung ist dabei die Stellung, in welcher das Schiebedach eine Öffnung in einem Dach beziehungsweise Dachhimmel eines Kraftfahrzeugs vollständig verschließt. Durch das Wischen eines Insassen des Kraftfahrzeugs beispielsweise mit einem oder mehreren Fingern über das berührungssensitive Tastfeld, insbesondere in die Richtung, in welche das Schiebedach zum Schließen der Öffnung des Daches des Kraftfahrzeugs verstellt werden muss, bewirkt das Verstellen des Schiebedachs in die Schließstellung. Dies ist insbesondere der Fall, wenn sich das Schiebedach in einer Offenstellung befindet. Das Schiebedach kann auch nach Beendigung der Wischbewegung automatisch weiter bis in die Schließstellung verstellt werden.

In einem weiteren Verfahrensschritt wird das Verstellen des Schiebedachs in die Offenstellung durch eine der ersten entgegengesetzten, zweiten Wischbewegung über das Tastfeld bewirkt. Die Offenstellung ist dabei, im Gegensatz zu der Schließstellung, eine Stellung, bei der die Öffnung im Dach des Kraftfahrzeugs zumindest teilweise oder vollständig freigegeben ist. Die zweite, der ersten Wischbewegung entgegengesetzte Wischbewegung ist beispielsweise eine Wischbewegung, bei der der Insasse des Kraftfahrzeugs über das berührungssensitive Tastfeld insbesondere in die Richtung wischt, in welcher das Schiebedach verstellt werden muss, um die Offenstellung zu erreichen. Das Schiebedach kann auch nach Beendigung der Wischbewegung automatisch weiter bis in die Offenstellung verstellt werden.

Der Insasse des Kraftfahrzeugs wischt also bei beiden Wischbewegungen vorzugsweise in Richtung einer Verstellbewegung des Schiebedachs. Damit ist das Schiebedach besonders einfach zu bedienen, da dies einer intuitiven Bewegung entspricht.

In einem weiteren Verfahrensschritt wird ein spezifisches Ansteuern des Schiebedachs, in Abhängigkeit von einer Stellung oder Bewegung des Schiebedachs, durch ein Antippen des Tastfelds bewirkt. Das heißt, es gibt eine Möglichkeit, das Schiebedach anzusteuern, welche abhängig von einem derzeitigen Zustand des Schiebedachs ist. So kann durch ein Antippen des Tastfelds beispielsweise ein anderes Verstellen des Schiebedachs bewirkt werden, wenn dieses in der Offenstellung ist, als wenn dieses sich in der Schließstellung befindet. Das Ansteuern kann zudem auch bei einer Stellung zwischen der Offenstellung und der Schließstellung ein anderes Ansteuern bewirken. Ein weiterer beispielhafter Zustand ist, wenn sich das Schiebedach gerade zwischen einer dieser beiden Stellungen verstellt wird und sich somit bewegt. Das Antippen entspricht dabei beispielsweise im Wesentlichen einem Drücken mit beispielsweise einem oder mehreren Fingern gegen das Tastfeld ohne das Ausführen einer Wischbewegung. Somit ist das Schiebedach besonders einfach zu bedienen, da es nicht nur durch Wischbewegungen angesteuert wird, sondern auch durch das durch einen Insassen besonders einfach ausführbare Antippen des Tastfelds. Solch ein Antippen kann dabei beispielsweise gekoppelt sein mit einem besonders intuitiven Ansteuern des Schiebedachs. Dabei wird das Antippen des Tastfelds nur bei einer durch das Antippen bewirkten Bewegung des Tastfelds registriert. Bei dieser Bewegung kann es sich beispielsweise um ein Kippen des Tastfelds um eine bestimmte Achse handeln oder auch um eine Bewegung des Tastfelds in Fahrzeughochrichtung, also in eine Verkleidung des Dach des Kraftfahrzeugs hinein. Die Bewegung des Tastfelds kann dabei sehr klein sein, beispielsweise 1 Millimeter oder weniger. Zum Teil kann es sehr schwierig sein, zwischen einer besonders langen Wischbewegung und einem bloßen Antippen des Tastfelds mittels des berührungssensitiven Tastfelds zu unterscheiden. Dafür sind gegebenenfalls besonders teure Sensoren im Tastfeld nötig und/oder komplizierte Algorithmen zur Unterscheidung notwendig, welche einen hohen Rechenaufwand erfordern. Dadurch, dass durch das Antippen das Tastfeld bewegt wird und das Antippen des Tastfelds nur bei dieser Bewegung des Tastfelds registriert wird, kann diese Unterscheidung besonders einfach und kostengünstig realisiert werden. Gleichzeitig ist es für den Benutzer auch nicht mehr nötig, bei den beiden Wischbewegungen schneller über das Tastfeld zu wischen als mit einer bestimmten Geschwindigkeit vorgesehen, so dass die Bedieneinheit zwischen einer Wischbewegung und einem Antippen unterscheiden kann. Damit ist das Schiebedach nun nochmals einfacher zu bedienen.

Ein berührungssensitives Tastfeld, auch Touchpad auch Touchslider genannt, wird dabei von einem Benutzer als besonders innovativ wahrgenommen und weist ein besonders Begeisterungspotential auf.

In vorteilhafter Ausgestaltung der Erfindung ist es vorgesehen, dass ein Anhalten einer Verstellbewegung des Schiebedachs durch das Antippen des Tastfelds bewirkt wird. Damit muss der Insasse des Kraftfahrzeugs nicht darauf warten, dass das Schiebedach einen Steuerbefehl erst vollständig ausführt, bevor er den nächsten Steuerbefehl zum Verstellen des Schiebedachs geben kann. Das Antippen während der Verstellbewegung des Schiebedachs stellt also eine Art universellen Abbruchbefehl dar. Ein Insasse kann also einen Bedienbefehl unmittelbar wieder zurück nehmen. Entsprechend ist das Schiebedach besonders einfach und intuitiv zu bedienen.

In besonders vorteilhafter Ausgestaltung der Erfindung ist es vorgesehen, dass ein Verstellen des Schiebedachs in eine Hubstellung durch ein Antippen des Tastfelds bei einem sich nicht bewegenden Schiebedach bewirkt wird. Bei der Hubstellung handelt es sich um eine von der Offenstellung und der Schließstellung unterschiedliche Stellung, welche auch bei einem Verstellen des Schiebedachs von der Offenstellung in die Schließstellung und umgekehrt üblicherweise nicht durch das Schiebedach durchlaufen wird. Beispielsweise bei einem Verstellen des Schiebedachs von der Schließstellung in die Offenstellung - oder umgekehrt - führt dieses im Wesentlichen eine translatorische Bewegung durch. Das heißt es fährt beispielsweise an Schienen entlang, so dass die Öffnung im Dach des Kraftfahrzeugs zumindest teilweise freigegeben oder verschlossen wird. Bei der Hubstellung rotiert das Schiebedach aus der Schließstellung im Wesentlichen um einen fixen Punkt, häufig ein vorderes Ende des Schiebedachs, so dass ein Spalt im Dach des Kraftfahrzeugs freigegeben wird. Im genannten Beispiel ist dieser Spalt dann auf einer der Vorwärtsfahrtrichtung des Kraftfahrzeugs abgewandten Seite, so dass eine Geräuscherzeugung durch einen Fahrtwind besonders reduziert ist, während das Schiebedach weiter für eine Lüftung eines Innenraums des Kraftfahrzeugs genutzt werden kann.

Das Schiebedach funktioniert dabei also als eine Art Klappe, wobei zum Verstellen in die Hubstellung üblicherweise das Schiebedach zunächst in die Schließstellung verstellt wird, bevor es unmittelbar danach die Rotationsbewegung durchführt. Vorteilhaft an der Hubstellung ist, dass also eine geringere Geräuschentwicklung während einer Fahrt des Kraftfahrzeugs im Innenraum entsteht als bei einem Schiebedach in Offenstellung, dass aber weiter ein Sonnenschutz der Insassen des Kraftfahrzeugs gegeben ist und diese mit Frischluft versorgt werden können. Bei einem sich nicht bewegenden Schiebedach wird also durch ein Antippen des Tastfelds besonders einfach ein Verfahren des Schiebedachs in diese vorteilhafte Stellung bewirkt. Bei einem sich bewegenden Schiebedach kann übrigens beispielsweise bereits ein zweimaliges, einfaches Antippen zum Bewirken der Verstellung des Schiebedachs in die Hubstellung genügen, wobei das erste Antippen das bereits vorher beschriebene Anhalten einer Verstellbewegung bewirkt.

Sollten die Zulassungsvorschriften für Kraftfahrzeuge in einem spezifischen Land die Ausführungsform der Erfindung in der vorher beschriebenen Art und Weise nicht erlauben, so wird die Ausführungsform des Verfahren dahingehend konkretisiert, dass ein Verstellen des Schiebedachs in eine Hubstellung durch ein Antippen nur bewirkt wird, wenn sich das Schiebedach nicht bewegt und sich in der Schließstellung befindet und nicht wenn es sich in der Offenstellung oder einer anderen Stellung befindet.

Weiterhin vorteilhaft ist es, wenn vorgesehen wird, dass ein Verstellen des Schiebedachs, welches sich nicht bewegt und sich nicht in der Schließstellung befindet, in Richtung der Schließstellung nur solange bewirkt wird, wie das Tastfeld angetippt wird. Das heißt, dass der Insasse des Kraftfahrzeugs eine manuelle Verstellung des Schiebedachs aus der Offenstellung in Richtung der Schließstellung bewirken kann. Dabei kann er das Schiebedach auch in eine Stellung zwischen der Offenstellung und der Schließstellung verstellen. Das heißt er kann also beispielsweise die durch das Schiebedach freigegebene Öffnung im Dach des Kraftfahrzeugs manuell verkleinern. Mit anderen Worten drückt ein Bediener des Schiebedachs so lange auf das Tastfeld, bis dieses eine gewünschte Position, insbesondere zwischen der Offenstellung und der Schließstellung erreicht hat. Sobald er aufhört das Tastfeld anzutippen, wird auch die Bewegung des Schiebedachs beendet. Damit kann durch den Benutzer besonders einfach eine bestimmte Position des Schiebedachs manuell eingestellt werden, die Bedienung ist dabei intuitiv.

Weiterhin vorteilhaft ist es, wenn mittels eines Algorithmus das Antippen des Tastfelds oder eine der Wischbewegungen über das Tastfeld mit einem Finger und/oder mehreren Fingern von einem Antippen des Tastfelds oder einer Wischbewegung über das Tastfeld mit einem anderen Körperteil und/oder Gegenstand unterschieden wird und in Abhängigkeit von dieser Unterscheidung angesteuert wird. Mit anderen Worten soll das Schiebedach über das Tastfeld ausschließlich mit Fingern gesteuert werden können, und nicht mit anderen Körperteilen und/oder Gegenständen. Damit werden ungewollte Fehlauslösungen, beispielsweise mit einer Stirn, einer Nase, einem Knie, einem Fuß, einem Ellenbogen oder einer Kugel vermieden. Damit kann das Schiebedach besonders zuverlässig gesteuert werden. Weiterhin ist es damit nicht mehr notwendig, durch eine konstruktive Maßnahme zu vermeiden, dass solch eine Fehlauslösung mit einem anderen Körperteil und/oder Gegenstand möglich ist. Es ist also insbesondere nicht mehr notwendig, die Bedieneinheit des Schiebedachs in einer Mulde einer Dachinnenverkleidung, auch Dachhimmel genannt, zu versenken. Damit ist es möglich, den Innenraum des Kraftfahrzeugs an der Stelle der Bedieneinheit mit dem berührungssensitiven Tastfeld als glatte Fläche zu gestalten, was in einem besonders ästhetischen Gesamteindruck resultiert.

Die vorstehend im Zusammenhang mit dem erfindungsgemäßen Verfahren beschriebenen Vorteile und Ausgestaltungen gelten in ebensolcher Weise für die Schiebedacheinrichtung für einen Kraftfahrzeug mit einem Schiebedach und Steuervorrichtung mit berührungssensitivem Tastfeld als Bedieneinheit, welche Steuervorrichtung dazu ausgebildet ist, das Schiebedach gemäß einem der vorhergehenden Optionen zu steuern.

Weiterhin vorteilhaft ist es, wenn das Tastfeld der Schiebedacheinrichtung einen Schalter umfasst, der durch eine Bewegung des Tastfelds schaltbar ist. Solch ein Schalter kann insbesondere ein mechanischer Druck- oder Wippschalter sein, der die Bewegung des Tastfelds registriert. Damit ist die besonders einfache Unterscheidung zwischen einer Wischbewegung und einem Antippen des Tastfelds kostengünstig und bauraumgünstig realisierbar.

Die vorstehend im Zusammenhang mit dem erfindungsgemäßen Verfahren zum Steuern eines elektrisch verstellbaren Schiebedachs und mit der erfindungsgemäßen Schiebedacheinrichtung beschriebenen Vorteile und Ausgestaltungen gelten in ebensolcher Weise für das Kraftfahrzeug mit der Schiebedacheinrichtung. Dabei ist es vorgesehen, dass das Tastfeld an dem Dachhimmel des Kraftfahrzeugs angeordnet ist. Diese Anordnung des Tastfelds an dem Dachhimmel des Kraftfahrzeugs entspricht einer besonders nahen Anordnung an dem Schiebedach selbst. Diese Positionierung entspricht einer Lage, bei der ein Benutzer des Schiebedachs intuitiv die Bedieneinheit vermutet. Damit ist das Schiebedach so besonders einfach zu bedienen.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: eine schematischen Perspektivansicht eines Innenraums eines Kraftfahrzeugs mit einer Schiebedacheinrichtung mit Schiebedach und Steuervorrichtung mit berührungssensitivem Tastfeld als Bedieneinheit; und
- Fig. 2a-c: schematischen Darstellungen der verschiedenen Bewegungen zum Steuern des Schiebedachs mittels des berührungssensitiven Tastfelds.

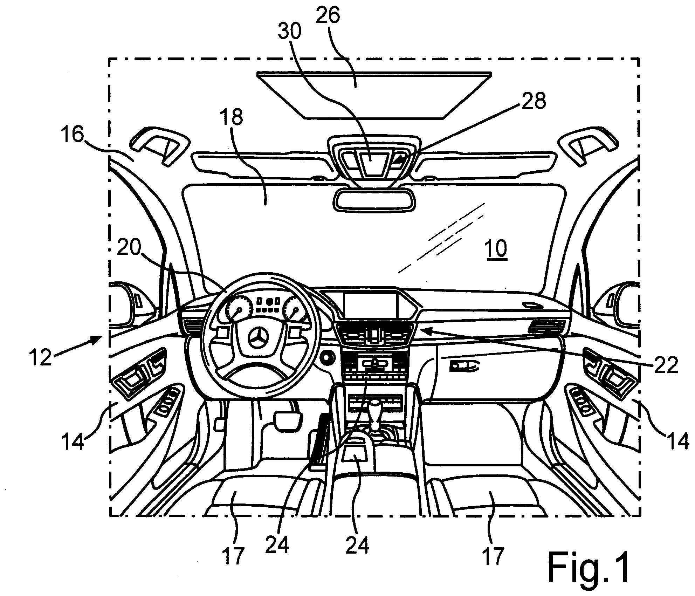

Fig. 1 zeigt in einer schematischen Perspektivansicht den Innenraum 10 eines beispielhaften Kraftfahrzeugs 12. Der Innenraum 10 des Kraftfahrzeugs 12 ist dabei durch zwei Seitentüren 14, einen Dachhimmel 16 und eine Frontscheibe 18 begrenzt. Weiterhin abgebildet sind zwei Sitze 17 für jeweilige Insassen des Kraftfahrzeugs, sowie ein Lenkrad 20 und eine Mittelkonsole 22 mit jeweiligen Bedienelementen 24.

An dem Dachhimmel 16 des Kraftfahrzeugs 10 ist ein Schiebedach 26 mit einer Bedieneinheit 28, welche ein berührungssensitives Tastfeld 30 umfasst, angeordnet. Das Schiebedach 26 ist dabei in seiner Schließstellung gezeigt, das heißt, es verdeckt eine Öffnung im Dachhimmel 16 vollständig.

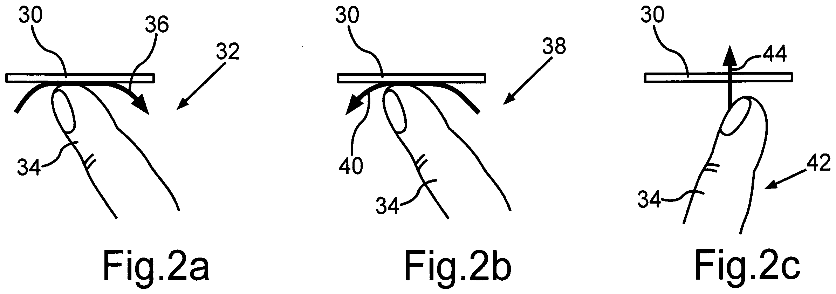

Das Schiebedach 26 kann in diese Schließstellung durch eine Wischbewegung 32 über das Tastfeld 30, welche schematisch in Fig. 2a gezeigt ist, verstellt werden. Dafür muss beispielsweise ein Insasse des Kraftfahrzeugs 10 mit seinem Finger 34 über das Tastfeld 30 in Richtung des dargestellten Pfeils 36 wischen. Der Insasse wischt also über das berührungssensitive Tastfeld 30 von Richtung des Schiebedachs 26 in Richtung der Frontscheibe 18 des Kraftfahrzeugs 10. Dies entspricht auch der Bewegungsrichtung des Schiebedachs 26 aus der Offenstellung, in welcher die Öffnung in Dachhimmel 16 des Kraftfahrzeugs 10 zumindest teilweise freigegeben ist, in die Schließstellung.

Fig. 2b zeigt in einer schematischen Darstellung wie ein Verstellen des Schiebedachs 26 in die Offenstellung durch eine der ersten Wischbewegung 32 entgegengesetzte zweite Wischbewegung 38 bewirkt werden kann. Hierzu wischt der Insasse des Kraftfahrzeugs 10 mit seinem Finger 34 in eine genau entgegengesetzte Richtung über das berührungssensitive Tastfeld 30. Das heißt, er führt seinen Finger 34 über das Tastfeld 30 von der Frontscheibe 18 in Richtung des Schiebedachs 26, was hier der Bewegungsrichtung des Schiebedachs 26 aus der Schließstellung in die Offenstellung entspricht. Beide Wischbewegungen 32, 38 werden dabei durch das berührungssensitive Tastfeld 30 beispielsweise mittels von Sensoren eines Multi-Capacitance-Tastfelds erfasst.

Fig. 2c zeigt in einer weiteren schematischen Ansicht, wie ein spezifisches Ansteuern des Schiebedachs 26 in Abhängigkeit von einer Stellung oder Bewegung des Schiebedachs 26 durch ein Antippen 42 des Tastfelds 30 bewirkt wird. Hierfür drückt der Insasse des Kraftfahrzeugs 10 mit seinem Finger 34 auf das Tastfeld 30, was auch durch den Pfeil 44 dargestellt ist.

Dieses Antippen 42 in Form eines Drückens bewegt erfindungsgemäß das Tastfeld 30 in Richtung des Pfeils 44 bewegen. Das Antippen 42 kann dann beispielsweise durch einen mechanischen Druckschalter registriert werden, der durch die Bewegung des Tastfelds 30 in Richtung des Pfeils 44 geschaltet wird. Damit ist eine besonders einfache und kostengünstige Unterscheidung zwischen den beiden Wischbewegungen 32, 38 und einem Antippen 42 möglich.

Während die beiden Wischbewegungen 32, 38 ein vollständiges automatisches Öffnen oder vollständiges automatisches Schließen des Schiebedachs 26 bewirken, sind einem Antippen 42 des Tastfelds 30 mehrere spezifische Ansteuerungen des Schiebedachs 26 in Abhängigkeit von der Stellung oder der Bewegung des Schiebedachs 26 zugeordnet. Bei einem sich nicht bewegenden und in Schließstellung befindlichen Schiebedach 26 kann dieses beispielsweise in eine Hubstellung, nach einem Antippen 42 des Tastfelds 30, verstellt werden. Bei der Hubstellung handelt es sich um eine Stellung, bei der beispielsweise nur ein von der Frontscheibe 18 abgewandter Spalt an dem von der Frontscheibe 18 abgewandten Seite des Schiebedachs 26 freigegeben wird, indem das Schiebedach um seine vordere, der Frontscheibe 18 zugewandten Längsseite rotiert.

Eine weitere Möglichkeit ist ein manuelles Schließen bei stehendem und nicht geschlossenem Schiebedach 26. Das heißt, das Schiebedach befindet sich in der Offenstellung oder einer Stellung zwischen Offenstellung und Schließstellung und bewegt sich dabei nicht. Durch das Antippen 42 des Tastfelds 30 und anschließendem Verweilen des Fingers 34 auf dem Tastfeld 30 wird beispielsweise der mechanische Druckschalter dauerhaft leitend geschaltet. Solange dieser Schalter leitend geschaltet ist, wird das Schiebedach 26 von seiner zu Anfang der Schaltung befindlichen Stellung in Richtung der Schließstellung verstellt. Sobald der Insasse des Kraftfahrzeugs 10 seinen Finger 34 von dem Tastfeld 30 nimmt und damit das Antippen 42 beendet, ist der Schalter nicht mehr leitend und diese Schließbewegung wird gestoppt. Damit kann das Schiebedach 26 besonders einfach in eine individuelle Position verstellt werden.

Bei einem sich bewegenden Schiebedach 26 bewirkt ein Antippen 42 des Tastfelds 30 ein Anhalten dieser Verstellbewegung. Bei einem laufenden, also sich verstellenden Schiebedach 26 wird somit eine Verstellbewegung unterbrochen. Dies ist beispielsweise auch möglich, ohne dass das Tastfeld 30 durch das Antippen 42 bewegt wird, sondern durch ein bloßes Berühren des Tastfelds 30. Damit ist eine besonders einfache Bedienung des Schiebedachs 26 möglich.

Insgesamt ist mit der Benutzung eines berührungssensitiven Tastfelds 30 als Bedieneinheit 28 zum Steuern eines elektrisch verstellbaren Schiebedachs 26 eine besonders hohe Kundenbegeisterung, eine hohe Akzeptanz durch einen Benutzer und ein intuitives Verständnis der Bedieneinheit 28 verbunden. Dadurch, dass ein berührungssensitives Tastfeld 30 zwischen einer Bedienbewegung durch einen Finger 34 und einer Bedienbewegung durch andere Körperteile und/oder Gegenstände unterscheiden kann, ist es zudem besonders zuverlässig. Außerdem muss dadurch keine konstruktive Maßnahme, beispielsweise ein Versenken des Tastfelds 30 in dem Dachhimmel 16 des Kraftfahrzeugs 12 in einer Mulde vorgesehen werden, um eine unbeabsichtigte Bedienung des Schiebedachs 26 zu verhindern. Dadurch sind mehr gestalterische Freiheiten möglich, insbesondere kann auch an der Position der Bedieneinheit 28 an dem Dachhimmel 16 des Kraftfahrzeugs 12 eine glatte Oberfläche gestaltet werden.

## Patentansprüche

1. Verfahren zum Steuern eines elektrisch verstellbaren Schiebedachs (26) eines Kraftfahrzeugs (12), mittels eines berührungssensitiven Tastfelds (30) als Bedieneinheit (28), wobei
- ein Verstellen des Schiebedachs (26) in eine Schließstellung durch eine erste Wischbewegung (32) über das Tastfeld (30) bewirkt wird;
- ein Verstellen des Schiebedachs (26) in eine Offenstellung durch eine der ersten entgegengesetzte zweite Wischbewegung (38) über das Tastfeld (30) bewirkt wird;
- ein spezifisches Ansteuern des Schiebedachs (26) in Abhängigkeit von einer Stellung oder Bewegung des Schiebedachs (26) erfolgt, welches durch ein Antippen (42) des Tastfelds (30) bewirkt wird, **dadurch gekennzeichnet dass**,
- das Antippen (42) des Tastfelds (30) nur bei einer durch das Antippen (42) bewirkten Bewegung (44) des Tastfelds (30) registriert wird.

2. Verfahren nach Anspruch 1,
**dadurch gekennzeichnet, dass**
ein Anhalten einer Verstellbewegung des Schiebedachs (30) durch das Antippen (42) des Tastfelds (30) bewirkt wird.

3. Verfahren nach Anspruch 1 oder 2,
**dadurch gekennzeichnet, dass**
ein Verstellen des Schiebedachs (26) in eine Hubstellung durch ein Antippen (42) des Tastfelds bei einem sich nicht bewegenden Schiebedach (26) bewirkt wird.

4. Verfahren nach Anspruch 1 oder 2,
**dadurch gekennzeichnet, dass**
ein Verstellen des Schiebedachs (26), welches sich nicht bewegt und sich nicht in der Schließstellung befindet, in Richtung der Schließstellung nur solange bewirkt wird, wie das Tastfeld (30) angetippt (42) wird.

5. Verfahren nach einem der vorherigen Ansprüche,
**dadurch gekennzeichnet, dass**
mittels eines Algorithmus das Antippen (42) des Tastfelds (30) oder eine der Wischbewegungen (32, 38) über das Tastfeld (30) mit einem Finger (34) von einem Antippen (42) des Tastfelds oder einer Wischbewegung (32, 38) über das Tastfeld (30) mit einem anderen Köperteil und/oder Gegenstand unterschieden wird und das Schiebedach in Abhängigkeit von dieser Unterscheidung angesteuert wird.

6. Schiebedacheinrichtung für ein Kraftfahrzeug (12) mit
- Schiebedach (26) und,
- Steuervorrichtung mit berührungssensitivem Tastfeld (30) als Bedieneinheit (28), welche Steuervorrichtung dazu ausgebildet ist, das Schiebedach (26) gemäß einem der vorhergehenden Ansprüche zu steuern.

7. Schiebedacheinrichtung nach Anspruch 6,
**dadurch gekennzeichnet, dass**
das Tastfeld (30) einen Schalter umfasst, der durch eine Bewegung (44) des Tastfelds (30) schaltbar ist.

8. Kraftfahrzeug (12) mit einer Schiebedacheinrichtung nach Anspruch 6 oder 7,
**dadurch gekennzeichnet, dass**
das Tastfeld (30) an einem Dachhimmel (16) des Kraftfahrzeugs angeordnet ist.

## Claims

1. Method for controlling an electrically adjustable sun roof (26) of a motor vehicle (12) by means of a touch-sensitive touchpad (30) as a control unit (28), wherein
- an adjustment of the sun roof (26) to a closed position is effected by a first swiping movement (32) across the touchpad (30);
- an adjustment of the sun roof (26) to an open position is effected by a second swiping movement (38) across the touchpad (30) opposed to the first;
- a specific activation of the sun roof (26) occurs as a function of a position or movement of the sun roof (26), which is effected by a tapping (42) of the touchpad (30),
**characterised in that**
- the tapping (42) of the touchpad (30) is registered only at a movement (44) of the touchpad (30) effected by the tapping (42).

2. Method according to claim 1,
**characterised in that**
a stopping of an adjusting movement of the sun roof (30) is effected by the tapping (42) of the touchpad (30).

3. Method according to claim 1 or 2,
**characterised in that**
an adjustment of the sun roof (26) to a raising movement is effected by a tapping (42) of the touchpad in a sun roof (26) which does not move.

4. Method according to claim 1 or 2,
**characterised in that**
an adjustment of the sun roof (26) which is not moved and is not in the closed position towards the closed position is effected only as long as the touchpad (30) is tapped (42).

5. Method according to any of the preceding claims,
**characterised in that**
an algorithm differentiates between the tapping (42) of the touchpad (30) or one of the swiping movements (32, 38) across the touchpad (30) with a finger (34) and a tapping (42) of the touchpad (30) a swiping movement (32, 38) across the touchpad (30) with another part of the body and/or another object, and the sun roof is activated as a function of this differentiation.

6. Sun roof device for a motor vehicle (12) comprising
- a sun roof (26) and
- a control device with a touch-sensitive touchpad (30) as a control unit (28), which control device is designed to control the sun roof (26) in accordance with any of the preceding claims.

7. Sun roof device according to claim 6,
**characterised in that**
the touchpad (30) comprises a switch which is switchable by a movement of the touchpad (30).

8. Motor vehicle (12) with a sun roof device according to claim 6 or 7,
**characterised in that**
the touchpad (30) is located at a roof lining (16) of the motor vehicle.

## Revendications

1. Procédé de commande d'un toit ouvrant (26) électrique réglable d'un véhicule automobile (12) au moyen d'un pavé tactile (30) faisant office d'unité de commande (28),
- un déplacement du toit ouvrant (26) dans une position de fermeture étant réalisé par un premier mouvement de balayage (32) sur le pavé tactile (30) ;
- un déplacement du toit ouvrant (26) dans une position ouverte étant réalisé par un second mouvement de balayage (38) opposé au premier, sur le pavé tactile (30) ;
- une commande spécifique du toit ouvrant (26) qui se produit par un effleurement (42) du pavé tactile (30), s'effectuant en fonction d'une position ou d'un mouvement du pavé tactile (26),
**caractérisé en ce que**
- l'effleurement (42) du pavé tactile (30) étant enregistré uniquement lorsqu'un mouvement (44) étant effectué par effleurement (42) sur le pavé tactile (30).

2. Procédé selon la revendication 1, **caractérisé en ce qu'**un arrêt d'un déplacement du toit ouvrant (30) est réalisé par l'effleurement (42) du pavé tactile (30).

3. Procédé selon la revendication 1 ou la revendication 2, **caractérisé en ce qu'**un déplacement du toit ouvrant (26) est effectué dans une position de course par un effleurement (42) du pavé tactile lorsque le toit ouvrant (26) ne se déplace pas.

4. Procédé selon la revendication 1 ou la revendication 2, **caractérisé en ce qu'**un déplacement du toit ouvrant (26) qui ne se déplace pas et qui ne se trouve pas dans la position de fermeture, se produit dans la direction de la position de fermeture tant que le pavé tactile (30) est effleuré.

5. Procédé selon l'une quelconque des revendications précédentes, **caractérisé en ce qu'**au moyen d'un algorithme, l'effleurement (42) du pavé tactile (30) ou l'un des mouvements de balayage (32, 38) par le biais du pavé tactile (30) à l'aide d'un doigt (34) se distingue d'un effleurement (42) du pavé tactile ou d'un mouvement de balayage (32, 38) sur le pavé tactile (30) au moyen d'une autre partie du corps et/ou d'un autre objet et **en ce que** le toit ouvrant est commandé en fonction de cette distinction.

6. Dispositif formant toit ouvrant pour un véhicule automobile (12) comprenant
- un toit ouvrant (26) et
- un dispositif de commande comprenant un pavé tactile (30) sous forme d'unité de commande (28) qui est conçue sous forme de dispositif de commande qui sert à commander le toit ouvrant (26) selon l'une quelconque des revendications précédentes.

7. Dispositif formant toit ouvrant selon la revendication 6, **caractérisé en ce que** le pavé tactile (30) comprenant un commutateur qui peut être commuté par un mouvement (44) du pavé tactile (30).

8. Véhicule automobile (12) comprenant un dispositif formant toit ouvrant selon la revendication 6 ou la revendication 7, **caractérisé en ce que** le pavé tactile (30) est disposé sur un pavillon (16) du véhicule automobile.
